# EUROPÄISCHE PATENTSCHRIFT

(11) **EP 3 204 175 B1**
(45) Veröffentlichungstag und Bekanntmachung des Hinweises auf die Patenterteilung: **13.06.2018**
(21) Anmeldenummer: 15800709.6
(22) Anmeldetag: 08.10.2015
(51) Int. Cl.: B21D 5/02

(54) **HANDHABUNGSSYSTEM UND VERFAHREN ZUM ENTNEHMEN ODER EINSETZEN FÜR BIEGEWERKZEUGE**
HANDLING SYSTEM AND METHOD FOR EXCHANGING BENDING TOOLS
SYSTÈME ET PROCÉDÉ DE MANIPULATION POUR OUTILS DE CINTRAGE

(30) Priorität: 08.10.2014 AT 507182014
(43) Veröffentlichungstag der Anmeldung: 16.08.2017
(73) Patentinhaber: TRUMPF Maschinen Austria GmbH & Co. KG., 4061 Pasching (AT)
(72) Erfinder: DENKMEIER, Thomas, 4050 Traun (AT)
(74) Vertreter: Burger, Hannes
(86) Internationale Anmeldenummer: PCT/AT2015/050249
(87) Internationale Veröffentlichungsnummer: WO 2016/054668

(56) Entgegenhaltungen:
- EP-A1- 2 498 928
- WO-A1-2013/116886
- WO-A1-2013/166538
- WO-A1-2014/061773

## Beschreibung

Die Erfindung betrifft ein Werkzeughandhabungssystem zum Entnehmen oder Einsetzen eines Biegewerkzeuges an einer Werkzeughalterung gemäß Oberbegriff des Anspruches 1 sowie ein Verfahren zum Entnehmen oder Einsetzen eines Biegewerkzeuges an einer Werkzeughalterung gemäß Oberbegriff des Anspruches 14.

Aus dem Stand der Technik sind bereits Biegewerkzeuge für Biegemaschinen bekannt, die für einen automatisierten Werkzeugwechsel durch Handhabungsgeräte geeignet sind. Da derartige Biegewerkzeuge häufig mit Verriegelungssystemen ausgestattet sind, die ein unvorhergesehenes Herausfallen aus einer Werkzeughalterung der Biegemaschine verhindern, muss mit einem derartigen Werkzeughandhabungssystem auch die Aktivierung bzw. die Deaktivierung des Verriegelungssystems bewerkstelligt werden können.

Ein Beispiel für ein derartiges Werkzeughandhabungssystem ist etwa aus WO 2013/116886 A1 bekannt. Bei dem darin offenbarten Werkzeughandhabungssystem wird während des Ergreifens eines Biegewerkzeuges mit der Handhabungsvorrichtung das Verriegelungssystem deaktiviert. Die Klemmung des Biegewerkzeuges in der Werkzeughalterung muss dabei bis zum vollständigen Ergreifen des Biegewerkzeuges aktiviert bleiben, da ansonsten ein unkontrolliertes Herausfallen des noch nicht vollständig ergriffenen Biegewerkzeuges eintreten kann, da die Verriegelungseinrichtung bereits vor dem vollständigen Ergreifen deaktiviert werden kann. Müssen bei einem derartigen Werkzeughandhabungssystem mehrere Biegewerkzeuge entnommen oder eingesetzt werden, muss die Werkzeugklemmung mehrfach aktiviert bzw. deaktiviert werden, was jedoch zu Positionsverschiebungen der Biegewerkzeuge innerhalb der Werkzeugklemmung führen kann und die automatische Handhabung bzw. Positionierung dadurch möglicherweise erschwert wird.

Die Aufgabe der Erfindung besteht darin, ein Werkzeughandhabungssystem bereitzustellen, mit dem automatisierte Rüstvorgänge an Biegemaschinen einfacher und besser durchgeführt werden können.

Die Aufgabe der Erfindung wird durch ein Werkzeughandhabungssystem gemäß Patentanspruch 1 gelöst. Dadurch, dass bei vollständig in der Greifausnehmung positioniertem erstem Greiferfinger dieser und der verstellbare zweite Greiferfinger in seiner Lösestellung das in der Greifausnehmung angeordnete und in dieser zugängliche Betätigungselement nicht kontaktieren oder die Verriegelungseinrichtung nicht deaktivieren und der verstellbare zweite Greiferfinger in der Greifstellung das Betätigungselement kontaktiert oder die Verriegelungseinrichtung deaktiviert, ist sichergestellt, dass ein unvorhergesehenes Herausfallen des Biegewerkzeuges während des Ergreifens nicht eintreten kann, auch wenn die Klemmung der Werkzeughalterung während des Ergreifens nicht aktiviert ist.

Der erste Greiferfinger ist dabei insbesondere oberhalb des verstellbaren zweiten Greiferfingers angeordnet und wird als erstes in die Greifausnehmung und die Hinterschneidung positioniert, wodurch das Biegewerkzeug bereits gegen ein Herausfallen geschützt ist, wenn in Folge das Betätigungselement für die Deaktivierung des Verriegelungssystems kontaktiert wird und dabei die Klemmung des Werkzeugs bereits inaktiv ist.

Die Erfindung bezieht sich dabei auch auf Greifer, die keinen feststehenden Greiferfinger, jedoch zumindest zwei verstellbare Greiferfinger aufweisen, die zwischen einer Lösestellung und einer Greifstellung verstellbar sind, wobei einer der Greiferfinger unabhängig von anderen Greiferfingern in seine Greifstellung verstellbar ist und zumindest ein weiterer Greiferfinger zeitlich nachfolgend in die Greifstellung verstellt wird. Ein zeitlich früher in die Greifstellung verstellter Greiferfinger ist in Zusammenhang mit dem von der Werkzeughandhabungssystem durchführbaren Verfahren dem ersten, insbesondere feststehenden, Greiferfinger gleichzusetzen.

Eine vorteilhafte Ausführungsform des Werkzeughandhabungssystems besteht darin, dass die Endfläche des verstellbaren zweiten Greiferfingers in der Lösestellung gegenüber der Endfläche des ersten Greiferfingers in Richtung der Greiferlängsachse betrachtet um einen Versatz zurückversetzt ist. Dadurch kann der erste Greiferfinger vollständig in die für das Ergreifen des Biegewerkzeuges erforderliche Position in der Greifausnehmung eingebracht werden, ohne dass der verstellbare zweite Greiferfinger das Betätigungselement bereits kontaktiert. Der Versatz ist dabei vorzugsweise größer als der für die Deaktivierung des Verriegelungssystems erforderliche Betätigungsweg des Betätigungselements.

Das vollständige Einführen des ersten Greiferfingers in die Greifausnehmung, ohne dass dieser das Betätigungselement kontaktiert, wird erleichtert, wenn der Endabschnitt des ersten Greiferfingers an seiner Endfläche eine Ausnehmung für das Betätigungselement aufweist. Durch die Anpassung der Ausnehmung an das Betätigungselement ist auch für dessen Ausformung und Positionierung eine größere Gestaltungsfreiheit gegeben.

Eine leicht zu fertigende Ausführungsform des Werkzeughandhabungssystems besteht darin, dass die Greifausnehmung als Greifnut ausgebildet ist und die Hinterschneidungen entlang der Greifnut verlaufen, sowie die Greifvorsprünge zueinander parallel und leistenförmig ausgebildet sind und quer zur Greiferlängsachse verlaufen.

Eine Ausführungsform, die auch für eine manuelle Handhabung der Biegewerkzeuge gut geeignet ist, ist dadurch gekennzeichnet, dass das Betätigungselement in der Greifausnehmung, insbesondere etwa zentral, zwischen den Hinterschneidungen angeordnet ist und die Betätigungsrichtung des Betätigungselements etwa mit der Greiferlängsrichtung zusammenfällt. Das Betätigungselement kann in diesem Fall durch Drücken mit einem Finger bedient und dadurch die Verriegelungseinrichtung deaktiviert werden.

Eine frühzeitige Deaktivierung des Verriegelungssystems durch Kontakt mit einem Greiferfinger lässt sich weiters vermeiden, wenn das Betätigungselement in einer der Hinterschneidungen angeordnet ist. Falls das Betätigungselement in einer oberen Hinterschneidung angeordnet ist, hängt das Biegewerkzeug bei Kontakt mit dem ersten Greiferfinger bereits auf diesem, falls die Klemmung des Biegewerkzeuges in der Werkzeughalterung deaktiviert ist.

Auf bewährte bauliche Ausführungen und Antriebskonzepte kann zurückgegriffen werden, wenn der verstellbare zweite Greiferfinger mittels eines Schwenkgelenks um eine Schwenkachse am Greifergrundkörper gelagert ist. Die Spitze des verstellbaren Greiferfingers bewegt sich beim Greifen bzw. Lösen auf einer Bewegungsbahn, die von der Position der Schwenkachse abhängig ist. Je größer die Länge des Greiferfingers von seiner Schwenkachse bis zu seiner Spitze ist, umso mehr ähnelt die Bewegungsbahn einer Geraden

Alternativ dazu kann der verstellbare zweite Greiferfinger mittels eines Schiebegelenks schräg in Bezug auf die Längsachse am Greifergrundkörper gelagert sein, wobei die geradlinige Bewegungsbahn der Greiferfingerspitze durch die Ausrichtung des Schiebegelenks bestimmt wird.

Für die Kontaktierung des Betätigungselements kann es vorteilhaft sein, wenn der verstellbare zweite Greiferfinger einen Betätigungsfortsatz aufweist, der in der Lösestellung in eine Ausnehmung am ersten Greiferfinger ragt. Ein derart vergrößerter Endabschnitt des verstellbaren Greiferfingers stellt auch bei einem Betätigungselement mit kleinen Abmessungen oder besonderer Positionierung eine zuverlässige Kontaktierung in der Greifstellung sicher.

Eine Ausführungsform, bei der die Greifvorsprünge zueinander parallel und leistenförmig ausgebildet sind und die Hinterschneidungen zueinander parallel und schwalbenschwanzförmig ausgebildet sind, ergibt ein Werkzeughandhabungssystem, das tolerant gegenüber kleinen Positionierungsfehlern des Greifers ist und dadurch für Handhabungsgeräte mit geringerer Positioniergenauigkeit geeignet ist.

Falls der Versatz des verstellbaren Greiferfingers in der Lösestellung gegenüber der Endfläche des feststehenden Greiferfingers zumindest einer Dickenabmessung der Greifvorsprünge in Richtung der Greiferlängsachse entspricht, ist beim Einführen des feststehenden Greiferfinger in die Greifausnehmung ein ausreichender Abstand des verstellbaren Greiferfingers vom Betätigungselement gegeben, um keine vorzeitige Deaktivierung des Verriegelungssystems zu bewirken.

Eine größere Toleranz gegenüber Positionierfehler des Werkzeughandhabungssystems wird erreicht, wenn am feststehenden Greiferfinger ein Zentriervorsprung und am Biegewerkzeug eine Zentrierausnehmung ausgebildet ist. Das Einfädeln der Greiferfinger in die Greifausnehmung kann dadurch in horizontaler und/oder vertikaler Richtung erleichtert werden.

Wenn der verstellbare Greiferfinger eine Kröpfung in Richtung zum feststehenden Greiferfinger aufweist, kann der Greifer auch bei vergleichsweise großen Außenabmessungen einen geringen Abstand zwischen den Greiferfingern aufweisen.

Die Erfindung betrifft weiters ein Verfahren zum Entnehmen oder Einsetzen eines Biegewerkzeuges an einer Werkzeughalterung mittels eines Greifers gemäß Oberbegriff des Anspruches 14. Dabei weist das Biegewerkzeug eine Greifausnehmung und eine mit der Werkzeughalterung zusammenwirkende Verriegelungseinrichtung auf, die mit einem in der Greifausnehmung angeordneten Betätigungselement deaktivierbar ist, und wobei der Greifer zumindest einen in Richtung einer Greiferlängsachse gerichteten ersten, insbesondere feststehenden, ersten Greiffinger und einen verstellbaren zweiten Greiffinger umfasst, die an ihren Endabschnitten bezogen auf die Greiferlängsachse quer nach außen weisende und etwa gegenüberliegende Greifvorsprünge zum Hintergreifen von einander gegenüberliegenden Hinterschneidungen in der Greifausnehmung aufweisen.

Die Handhabung des Biegewerkzeuges wird erfindungsgemäß dadurch verbessert, dass beim Entnehmen des Biegewerkzeuges zuerst der erste Greiferfinger in vollständigen Eingriff mit einer Hinterschneidung gebracht wird und dabei der verstellbare zweite Greiferfinger das Betätigungselement nicht kontaktiert oder die Verriegelungseinrichtung nicht deaktiviert und anschließend der verstellbare zweite Greiferfinger in Eingriff mit der weiteren Hinterschneidung gebracht wird und dabei das Betätigungselement kontaktiert oder die Verriegelungseinrichtung deaktiviert und dass beim Einsetzen des Biegewerkzeuges der verstellbare zweite Greiferfinger außer Eingriff mit der weiteren Hinterschneidung gebracht wird und dadurch das Betätigungselement nicht mehr kontaktiert wird bzw. die Verriegelungseinrichtung aktiviert wird und anschließend der erste Greiferfinger außer Eingriff mit der Hinterschneidung der Greifnut gebracht wird.

Zum besseren Verständnis der Erfindung wird diese anhand der nachfolgenden Figuren näher erläutert.

Es zeigen jeweils in stark vereinfachter, schematischer Darstellung:
- Fig. 1: eine Ansicht eines Werkzeughandhabungssystems mit vor der Greifnut positionierten Greiferfingern in Lösestellung;
- Fig. 2: eine weitere Ausführungsform eines Werkzeughandhabungssystems mit vor der Greifnut positionierten Greiferfingern in Lösestellung;
- Fig. 3: eine Ansicht des Werkzeughandhabungssystems gemäß Fig. 2 mit in der Greifnut positionierten Greiferfingern in Greifstellung;
- Fig. 4: eine weitere Ausführungsform eines Werkzeughandhabungssystems mit einem Versatz des verstellbaren zweiten Greiferfingers in Lösestellung;
- Fig. 5: eine weitere Ausführungsform eines Werkzeughandhabungssystems mit einer Ausnehmung im ersten Greiferfinger;
- Fig. 6: eine Draufsicht auf das Werkzeughandhabungssystem gemäß Fig. 5;
- Fig. 7: eine weitere Ausführungsform eines Werkzeughandhabungssystems mit einem Zentriervorsprung;
- Fig. 8: eine Draufsicht auf ein Werkzeughandhabungssystem gemäß Fig. 7;
- Fig. 9: ein Werkzeughandhabungssystem mit einem Betätigungsfortsatz am verstellbaren Greiferfinger.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

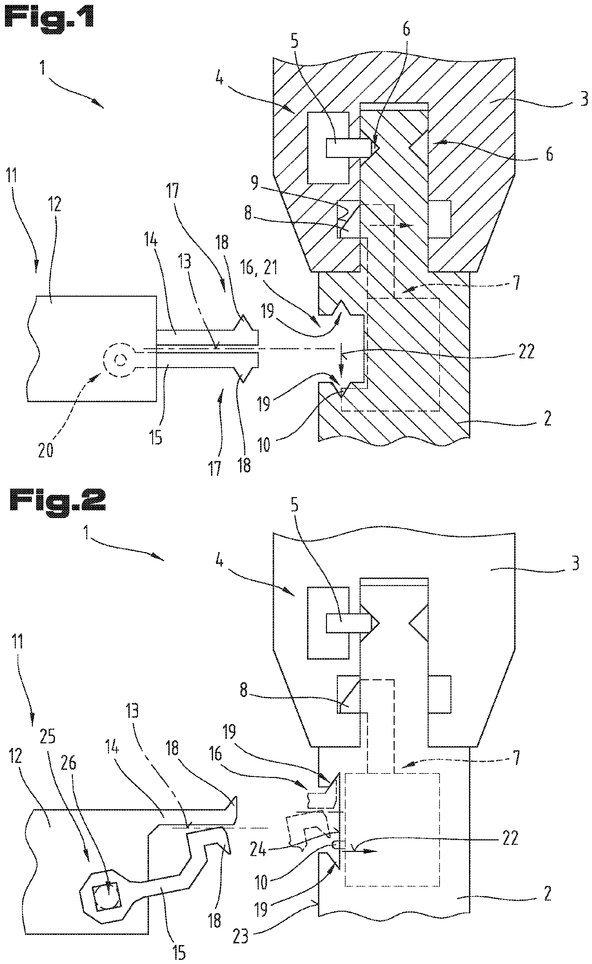

Fig. 1 zeigt eine Ansicht eines Werkzeughandhabungssystems 1 zum Entnehmen oder Einsetzen eines Biegewerkzeuges 2 an einer Werkzeughalterung 3. Die Werkzeughalterung 3 ist beispielsweise Bestandteil einer nicht dargestellten Biegemaschine oder eines Speichersystems für Biegewerkzeuge 2.

Biegewerkzeuge 2, die von unten in eine Werkzeughalterung 3 eingesetzt werden, werden üblicherweise mittels einer Fixiereinrichtung 4 in einer Aufnahmenut der Werkzeughalterung 3 fixiert, wozu die Fixiereinrichtung 4 beispielsweise ein Klemmelement 5 aufweisen kann, das mit Klemmausnehmungen 6 am Biegewerkzeug 2 zusammenwirkt. Da zum Wechseln eines Biegewerkzeuges 2 die Fixiereinrichtung 4 deaktiviert werden muss, sind Biegewerkzeuge 2 häufig mit einer Verriegelungseinrichtung 7 versehen, die ein unbeabsichtigtes Herausfallen des Biegewerkzeuges 2 beim Deaktivieren der Fixiereinrichtung 4 verhindert. Im dargestellten Ausführungsbeispiel umfasst die Verriegelungseinrichtung 7 beispielsweise ein verstellbares Verriegelungselement 8, das bei eingesetztem Biegewerkzeug 2 in eine Verriegelungsausnehmung 9 in der Werkzeughalterung 3 formschlüssig eingreift und nur bei Deaktivierung der Verriegelungseinrichtung 7 außer Eingriff mit der Sperrausnehmung 9 gebracht wird (durch strichlierten Pfeil angedeutet) und dadurch das Biegewerkzeug 2 nach unten entnommen werden kann.

Zur Deaktivierung der Verriegelungseinrichtung 7 umfasst diese ein Betätigungselement 10, das außerhalb der Werkzeughalterung 3 angeordnet ist und mit dem am Verriegelungselement 8 ein Wechsel zwischen einer Verriegelungsstellung und einer Entriegelungsstellung bewirkt werden kann.

Für das automatisierte Entnehmen oder Einsetzen des Biegewerkzeuges 2 umfasst das Werkzeughandhabungssystem einen Greifer 11 zum Manipulieren des Biegewerkzeuges 2, der auch die Aufgabe der Betätigung des Betätigungselements 10 erfüllt.

Der Greifer 11 ist an einem nicht dargestellten Manipulator, beispielsweise einem Industrieroboter angeordnet und umfasst einen Greifergrundkörper 12, von dem in Richtung einer Greiferlängsachse 13 zumindest zwei Greiferfinger 14 und 15 ausgehen, die in eine Greifausnehmung 16 am Biegewerkzeug 2 positionierbar sind. Um ein sicheres Ergreifen eines Biegewerkzeugs 2 zu gewährleisten, weisen die Greiferfinger 14, 15 an ihren Endabschnitten 17 Greifvorsprünge 18 auf, die, bezogen auf die Greiferlängsachse 13, quer nach außen weisen, etwa gegenüberliegend angeordnet sind und zum Eingreifen in einander gegenüberliegende Hinterschneidungen 19 in der Greifausnehmung 16 geeignet sind.

Das Betätigungselement 10 ist in der Greifausnehmung 16 angeordnet und in dieser für zumindest einen Greiferfinger 14, 15 zugänglich.

Am Greifer 11 ist ein erster Greiferfinger 14 am dem Greifergrundkörper 12 angeordnet, der insbesondere feststehend ist, und zumindest ein zweiter Greiferfinger 15 mittels eines Gelenks 20 relativ zum Greifergrundkörper 12 und damit auch relativ zum ersten Greiferfinger 14 verstellbar. Im Folgenden wird eine bezogen auf den ersten Greiferfinger 14 angenäherte Stellung des verstellbaren zweiten Greiferfingers 15 als Lösestellung bezeichnet, da in dieser Stellung der Greifer 11 vom Biegewerkzeug 2 gelöst werden kann und wird eine vom ersten Greiferfinger 14 entfernte Stellung des verstellbaren zweiten Greiferfingers 15 als Greifstellung bezeichnet, da in dieser Stellung das Biegewerkzeug 2 vom Greifer 11 ergriffen ist. In Fig. 1 sind die Greiferfinger 14, 15 in Lösestellung dargestellt und können diese in die Greifausnehmung 16 am Biegewerkzeug 2 eingeführt werden bzw. aus dieser entfernt werden.

Der erste Greiffinger 14 ist in den Ausführungsbeispielen als feststehend am Greifergrundkörper 12 dargestellt, kann jedoch wie einleitend erwähnt, selbst verstellbar sein.

Beim Entnehmen des Biegewerkzeugs 2 aus der Werkzeughalterung 3 wird der Greifer 11 so positioniert, dass der Greifvorsprung 18 des ersten Greiferfingers 14 in die obere Hinterschneidung 19 in der Greifausnehmung 16 eingeführt wird. Wie aus den Abmessungen der Greiferfinger 14, 15 im Vergleich mit der Abmessung der Greifausnehmung 16 erkennbar ist, kontaktiert der verstellbare zweite Greiferfinger 15 in Lösestellung das in der unteren Hinterschneidung 19 angeordnete Betätigungselement 10 nicht, und ist die Verriegelungseinrichtung 7 noch aktiviert, obwohl erste Greiferfinger 14 bereits in Eingriff mit der Greifausnehmung 16 ist. Erst durch das Verstellen des verstellbaren zweiten Greiferfingers 15 in die Greifstellung, in der der Greifvorsprung 18 des zweiten Greiferfingers 15 in die untere Hinterschneidung 19 eingreift, wird das Betätigungselement 10 betätigt und dadurch die Verriegelungseinrichtung 7 deaktiviert. Die Deaktivierung der Verriegelungseinrichtung 7 erfolgt dadurch erst zu einem Zeitpunkt in dem das Biegewerkzeug 2 bereits mit dem Greifer 12 verbunden ist und kann bei einem derartigen Werkzeughandhabungssystem 1 die Fixiereinrichtung 4 für das Biegewerkzeug 2 bereits vor dem Ergreifen durch den Greifer 11 deaktiviert werden, da ein Herausfallen des Biegewerkzeuges 2 durch die bis zum Ergreifen aktiv bleibende Verriegelungseinrichtung 7 verhindert ist. Erfindungsgemäß wird demnach das Betätigungselement 10 in der Lösestellung des verstellbaren zweiten Greiferfingers 15 nicht kontaktiert und bleibt dadurch die Verriegelungseinrichtung 7 aktiv und wird in der Greifstellung des verstellbaren zweiten Greiferfingers 15 das Betätigungselement 10 kontaktiert und dadurch die Verriegelungseinrichtung 7 deaktiviert.

Das Gelenk 20 ist im Ausführungsbeispiel gemäß Fig. 1 durch ein Schwenkgelenk gebildet, es kann jedoch auch durch ein Schiebegelenk oder ein anderes Gelenk ersetzt sein, mit dem der verstellbare Greiferfinger 15 zwischen der Lösestellung und der Greifstellung verstellt werden kann. Selbstverständlich ist der verstellbare zweite Greiferfinger 15 auch mit einem Verstellantrieb verbunden, der aus Gründen der Einfachheit an dieser Stelle nicht dargestellt bzw. näher erläutert wird.

Die Greifausnehmung 16 kann verschiedenartig geformt sein, wobei eine Ausführung als Greifnut 21, die sich in Ansichtsrichtung gemäß Fig. 1 erstreckt, vorteilhaft ausgebildet sein. Eine alternative Ausführungsform besteht beispielsweise in einer topfförmigen Ausführung der Greifausnehmung 16.

Im Ausführungsbeispiel gemäß Fig. 1 ist die Verstellrichtung des verstellbaren zweiten Greiferfingers 15 rechtwinkelig quer zur Greiferlängsachse 13 und ist mit einem Pfeil die Betätigungsrichtung 22 des Betätigungselements 10 angedeutet.

Das Verriegelungselement 8 ist im Ausführungsbeispiel gemäß Fig. 1 hakenförmig ausgebildet, es kann jedoch auch davon abweichende, zum Beispiel zapfenförmig oder bolzenförmig sein.

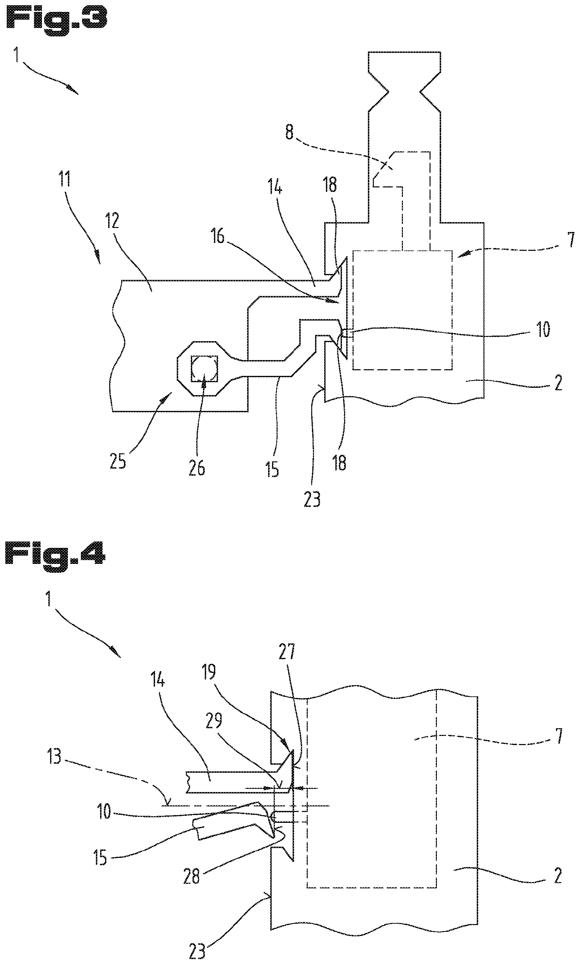

In den Fig. 2 und 3 ist eine weitere Ausführungsform eines erfindungsgemäßen Werkzeughandhabungssystems 1 dargestellt, wobei Fig. 2 in Volllinien die vor der Greifausnehmung 16 positionierten Greiferfinger 14 und 15 in Lösestellung, sowie in strichlierten Linien die in der Greifausnehmung 16 positionierten Greiferfinger 14, 15 in Lösestellung zeigt und in Fig. 3 die Greiferfinger 14, 15 in Greifstellung gezeigt sind.

Die Greifausnehmung 16 mit den Hinterschneidungen 19 besitzt einen schwalbenschwanzförmigen Querschnitt und kann dabei topfförmig oder nutförmig ausgebildet sein.

Bei einer Greifausnehmung 16 in Form einer Schwalbenschwanznut besitzt das Biegewerkzeug 2 in der Greifausnehmung 16 einen zu einer Werkzeugaußenfläche 23 parallelen Nutgrund 24 und nimmt der Nutquerschnitt in Richtung zur Werkzeugaußenfläche 23 ab, wodurch dreieckförmige Hinterschneidungen 19 gebildet sind. In der dargestellten Ausführungsform ist das Betätigungselement 10 zwischen diesen Hinterschneidungen 19 angeordnet und verläuft die Betätigungsrichtung 22 bzw. die Verstellrichtung des Betätigungselements 10 parallel zur Greiferlängsachse 13.

In Fig. 2 ist in strichlierten Linien die Positionierung der Greiferfinger 14, 15 in der Greifausnehmung 16 dargestellt und ist erkennbar, dass bei einem Eingriff des ersten Greiferfingers 14 in die obere Hinterschneidung 19 der in Lösestellung befindliche verstellbare zweite Greiferfinger 15 das Betätigungselement 10 nicht kontaktiert und daher in dieser Stellung der Greiferfinger 14, 15 die Verriegelungseinrichtung 7 aktiv ist, wodurch ein Herausfallen des Biegewerkzeugs 2 auch bei deaktivierter Fixiereinrichtung 4 verhindert ist. Die Betätigungsrichtung 22 des Betätigungselements 10 stimmt in diesem Ausführungsbeispiel nicht mit der Verstellrichtung des verstellbaren Greiferfingers 15 überein, wie es beispielsweise in der Ausführung gemäß Fig. 1 der Fall ist. Die Verstellung des verstellbaren zweiten Greiferfingers 15 erfolgt in diesem Ausführungsbeispiel ähnlich wie in Fig. 1 mittels eines Schwenkgelenks 25, wodurch eine Schwenkachse 26 am Greifergrundkörper 11, 12 gebildet ist.

In Fig. 3 ist das vom Greifer 11 gehaltene Biegewerkzeug 2 dargestellt, wobei die Greiferfinger 14, 15 sich in Greifstellung befinden und dadurch das Betätigungselement 10 vom verstellbaren Greiferfinger 15 kontaktiert wird und weiters dadurch die Verriegelungseinrichtung 7 deaktiviert ist. Im dargestellten Ausführungsbeispiel ist dadurch das Verriegelungselement 8 in das Innere des Biegewerkzeugs 2 verstellt und kann dieses daher aus der Werkzeughalterung 3 entnommen werden.

Der verstellbare Greiferfinger 15 besitzt in diesem Ausführungsbeispiel eine gekröpfte Form, wodurch die Greiferfinger 14, 15 die in kleine Greifausnehmungen 16 eingeführt werden können, am Greifergrundkörper 12 einen vergleichsweise größeren Abstand zueinander aufweisen als an deren Endabschnitt 17, wodurch im Greifergrundkörper 12 ausreichend Platz für die Verbindung des verstellbaren Greiferfingers 15 mit einem geeigneten Antrieb gegeben ist.

Fig. 4 zeigt einen Ausschnitt einer weiteren Ausführungsform eines Werkzeughandhabungssystems 1, bei dem der erste Greiferfinger 14 bereits in die obere Hinterschneidung 19 der Greifausnehmung 16 eines Biegewerkzeuges 2 eingebracht ist und der in Lösestellung befindliche verstellbare zweite Greiferfinger 15 das Betätigungselement nicht kontaktiert. In dieser Ausführungsform ist dies dadurch bewirkt, dass zwischen der Endfläche 27 des ersten Greiferfingers 14 und der Endfläche 28 des verstellbaren zweiten Greiferfingers 15 in der Lösestellung in Richtung der Greiferlängsachse 13 betrachtet ein Versatz 29 besteht, um den der verstellbare Greiferfinger 15 in der Lösestellung gegenüber dem ersten Greiferfinger 14 zurück versetzt ist. Dadurch kann der erste Greiferfinger 14 mit seinem Greifvorsprung 18 in die obere Hinterschneidung 19 eingefädelt werden, ohne dass der verstellbare zweite Greiferfinger 15 das Betätigungselement 10 kontaktiert und dadurch eine vorzeitige Deaktivierung der Verriegelungseinrichtung 7 bewirkt. Die Deaktivierung der Verriegelungseinrichtung 7 erfolgt erst bei Verstellen des zweiten Greiferfingers 15 in die Greifstellung, wodurch auch das Betätigungselement 10 betätigt wird.

In Fig. 4 ist ein weiteres, optionales Merkmal dargestellt, wonach der Versatz 29 des verstellbaren Greiferfingers 15 gegenüber dem ersten Greiferfinger 14 größer ist, als eine Dickenabmessung des Greifvorsprungs 18 des ersten Greiferfingers 14 in Richtung der Greiferlängsachse 13 betrachtet. Dadurch ist für viele Ausführungsformen des Betätigungselements 10 ein ausreichend großer Versatz 29 gegeben und dabei sichergestellt, dass beim Positionieren des ersten Greiferfingers 14 in die Greifausnehmung 16 das Betätigungselement 10 nicht vorzeitig ausgelöst wird.

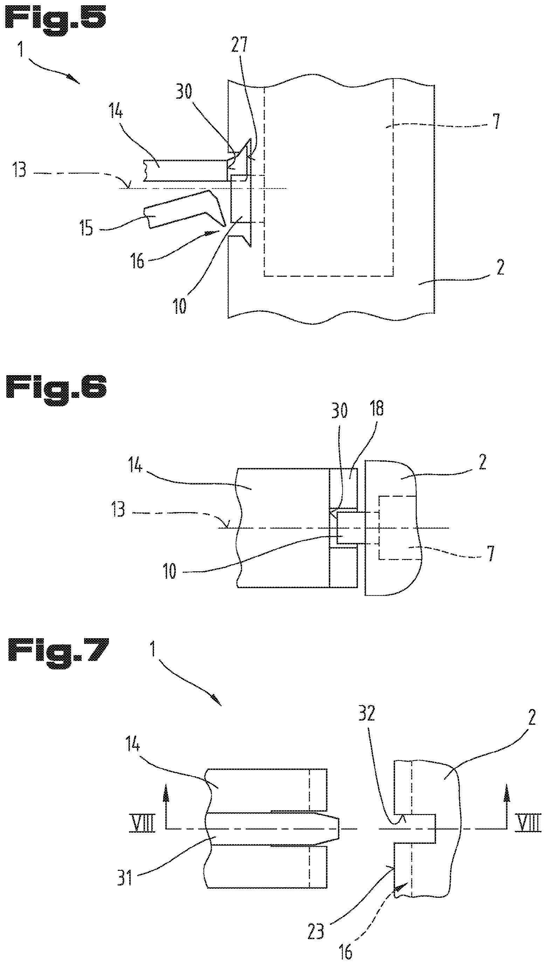

Fig. 5 zeigt eine ähnliche Ausführungsform eines Werkzeughandhabungssystems 1 wie in Fig. 4, bei der der verstellbare zweite Greiferfinger 15 in Lösestellung ebenfalls einen Versatz gegenüber dem ersten Greiferfinger 14 in Richtung der Greiferlängsachse 13 betrachtet aufweist. Als zusätzliches Merkmal weist der erste Greiferfinger 14 in seiner stirnseitigen Endfläche 27 eine Ausnehmung 30 für das Betätigungselement 10 auf, wodurch der erste Greiferfinger 14 auch ein Betätigungselement 10 mit größeren Abmessungen beim Einfädeln in die Greifausnehmung 16 nicht kontaktiert.

In Fig. 6 ist in einer Draufsicht auf eine Anordnung gemäß Fig. 5 dargestellt, dass die Ausnehmung 30 am ersten Greiferfinger 14 in dieser Ausführungsform größere Abmessungen aufweist als das Betätigungselement 10 und dadurch auch bei geringfügigen Positionierungenauigkeiten des Greifers 11 keine unerwünschte Deaktivierung der Verriegelungseinrichtung 7 erfolgt. Der erste Greiferfinger 14 besitzt eine gegabelte Form und greift seitlich neben dem Betätigungselement 10 vorbei.

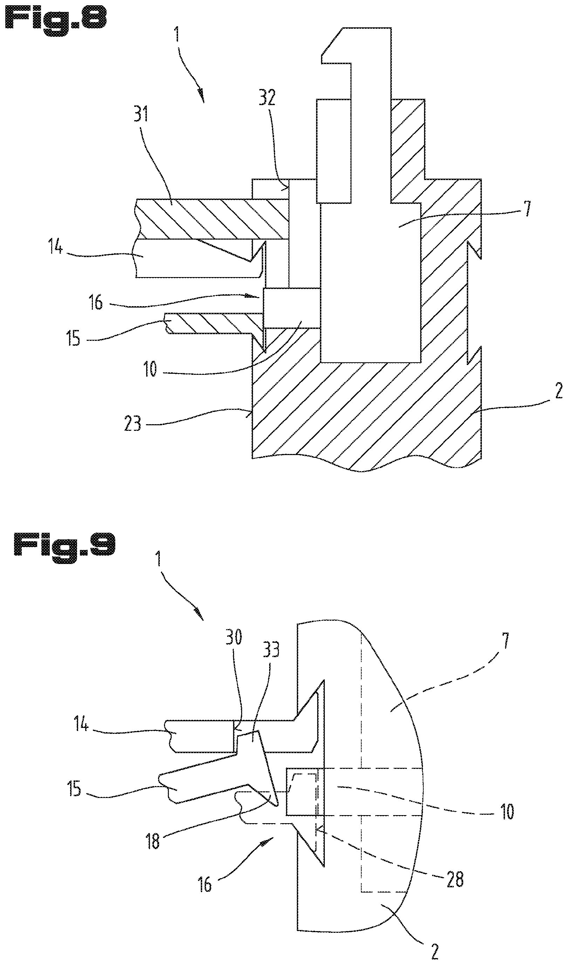

Eine weitere mögliche Ausführungsform des Werkzeughandhabungssystems 1 ist in den Fig. 7 und 8 dargestellt, wobei der erste Greiferfinger 14 mit einem Zentriervorsprung 31 verbunden ist bzw. einen solchen aufweist, wobei dieser mit einer Zentrierausnehmung 32 am Biegewerkzeug 2 während der Positionierung der Greiferfinger 14, 15 in der Greifausnehmung 16 zusammenwirkt. In der in Fig. 7 dargestellten Draufsicht auf einen derartigen Greiferfinger 14 ist eine keilförmige Ausführung des Zentrierfingers 31 angedeutet, die ein leichteres Einführen in die Zentrierausnehmung 32 bewirkt. Zusätzlich oder alternativ ist es auch möglich, dass die Zentrierausnehmung 32 mit abgeschrägten Flächen ausgebildet ist, wodurch ebenfalls ein leichteres Positionieren der Greiferfinger 14, 15 in der Greifausnehmung 16 ermöglicht wird.

Die Zentrierausnehmung 32 ist in der dargestellten Ausführungsform als vertikaler Schlitz in der Werkzeugaußenfläche 23 des Biegewerkzeuges 2 ausgebildet, es sind jedoch auch alternative Ausführungsform einer derartigen Zentrierausnehmung 32 und des Zentriervorsprungs 31 möglich, beispielsweise in Form einer kegelförmigen Ausführung.

In der Fig. 9 ist eine weitere und gegebenenfalls für sich eigenständige Ausführungsform des Werkzeughandhabungssystems gezeigt, wobei wiederum für gleiche Teile gleiche Bezugszeichen bzw. Bauteilbezeichnungen wie in den vorangegangenen Fig. 1 bis 8 verwendet werden. Um unnötige Wiederholungen zu vermeiden, wird auf die detaillierte Beschreibung in den vorangegangenen Fig. 1 bis 8 hingewiesen bzw. Bezug genommen.

In Fig. 9 ist eine weitere Ausführungsform eines Werkzeughandhabungssystems 1 dargestellt, bei der der verstellbare zweite Greiferfinger 15 einen Betätigungsfortsatz 33 aufweist, der in der Lösestellung in eine Ausnehmung 30 am ersten Greiferfinger 14 ragt. Dies ermöglicht weitere Wahlfreiheit bezüglich der Anordnung des Betätigungselements 10 innerhalb der Greifausnehmung 16 und kann insbesondere in Kombination mit dem anhand des Ausführungsbeispieles in Fig. 4 beschriebenen Versatzes 29 vorteilhaft genutzt werden. Durch den Betätigungsfortsatz 33, der in Gegenrichtung des Greifvorsprungs 18 orientiert ist, ergibt sich in der strichliert dargestellten Greifstellung eine vergrößerte Endfläche 28, die für die Kontaktierung des Betätigungselements 10 genutzt werden kann.

Die Ausführungsbeispiele zeigen mögliche Ausführungsvarianten des Werkzeughandhabungssystems 1, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1; 2, 3; 4; 5, 6; 7, 8; 9 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Werkzeughandhabungssystems 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Werkzeughandhabungssystem | 31 | Zentriervorsprung |
| 2 | Biegewerkzeug | 32 | Zentrierausnehmung |
| 3 | Werkzeughalterung | 33 | Betätigungsfortsatz |
| 4 | Fixiereinrichtung | | |
| 5 | Klemmelement | | |
| 6 | Klemmausnehmung | | |
| 7 | Verriegelungseinrichtung | | |
| 8 | Verriegelungselement | | |
| 9 | Verriegelungsausnehmung | | |
| 10 | Betätigungselement | | |
| 11 | Greifer | | |
| 12 | Greifergrundkörper | | |
| 13 | Greiferlängsachse | | |
| 14 | Greiferfinger | | |
| 15 | Greiferfinger | | |
| 16 | Greifausnehmung | | |
| 17 | Endabschnitt | | |
| 18 | Greifvorsprung | | |
| 19 | Hinterschneidung | | |
| 20 | Gelenk | | |
| 21 | Greifnut | | |
| 22 | Betätigungsrichtung | | |
| 23 | Werkzeugaußenfläche | | |
| 24 | Nutgrund | | |
| 25 | Schwenkgelenk | | |
| 26 | Schwenkachse | | |
| 27 | Endfläche | | |
| 28 | Endfläche | | |
| 29 | Versatz | | |
| 30 | Ausnehmung | | |

## Patentansprüche

1. Werkzeughandhabungssystem (1) zum Entnehmen oder Einsetzen eines Biegewerkzeuges (2) an einer Werkzeughalterung (3), umfassend ein Biegewerkzeug (2) mit einer Greifausnehmung (16) und einer mit der Werkzeughalterung (3) zusammenwirkenden Verriegelungseinrichtung (7), die mittels eines in der Greifausnehmung (16) angeordneten und in dieser zugänglichen Betätigungselements (10) deaktivierbar ist, sowie einen Greifer (11) zum Manipulieren des Biegewerkzeuges (2) und des Betätigungselements (10), mit einem Greifergrundkörper (12) mit zumindest zwei in Richtung einer Greiferlängsachse (13) gerichteten Greiffingern (14, 15), die an ihren Endabschnitten (17) bezogen auf die Greiferlängsachse (13) quer nach außen weisende und etwa gegenüberliegende Greifvorsprünge (18) zum Eingreifen in einander gegenüberliegenden Hinterschneidungen (19) in der Greifausnehmung (16) aufweisen, wobei zumindest ein am Greifergrundkörper (12), insbesondere feststehender, angeordneter erster Greiferfinger (14) und zumindest ein mittels eines Gelenks (20) am Greifergrundkörper (12) verstellbarer zweiter Greiferfinger (15) ausgebildet ist und der zweite Greiferfinger (15) zwischen einer, bezogen auf den ersten Greiferfinger (14), angenäherten Lösestellung und einer entfernten Greifstellung verstellbar ist, **dadurch gekennzeichnet, dass** bei vollständig in der Greifausnehmung (16) positioniertem erstem Greiferfinger (14) dieser und der verstellbare zweite Greiferfinger (15) in der Lösestellung das Betätigungselement (10) nicht kontaktieren oder die Verriegelungseinrichtung (7) nicht deaktivieren und der verstellbare zweite Greiferfinger (15) in der Greifstellung das Betätigungselement (10) kontaktiert oder die Verriegelungseinrichtung (7) deaktiviert.

2. Werkzeughandhabungssystem (1) nach Anspruch 1, **dadurch gekennzeichnet, dass** die Endfläche (28) des verstellbaren zweiten Greiferfingers (15) in der Lösestellung gegenüber der Endfläche (27) des ersten Greiferfingers (14) in Richtung der Greiferlängsachse (13) betrachtet um einen Versatz (29) zurückversetzt ist.

3. Werkzeughandhabungssystem (1) nach Anspruch 1 oder 2, **dadurch gekennzeichnet, dass** der Endabschnitt (17) des ersten Greiferfingers (14) an seiner Endfläche (27) eine Ausnehmung (30) für das Betätigungselement (10) aufweist.

4. Werkzeughandhabungssystem (1) nach einem der Ansprüche 1 bis 3, **dadurch gekennzeichnet, dass** die Greifausnehmung (16) als Greifnut (21) ausgebildet ist und die Hinterschneidungen (19) entlang der Greifnut (21) verlaufen, sowie die Greifvorsprünge (18) zueinander parallel und leistenförmig ausgebildet sind und quer zur Greiferlängsachse (13) verlaufen.

5. Werkzeughandhabungssystem (1) nach einem der Ansprüche 1 bis 4, **dadurch gekennzeichnet, dass** das Betätigungselement (10) in der Greifausnehmung (16), insbesondere etwa zentral, zwischen den Hinterschneidungen (19) angeordnet ist und die Betätigungsrichtung (22) des Betätigungselements (10) etwa zur Greiferlängsachse (13) parallel verläuft.

6. Werkzeughandhabungssystem (1) nach einem der Ansprüche 1 bis 4, **dadurch gekennzeichnet, dass** das Betätigungselement (10) in einer der Hinterschneidungen (19) angeordnet ist.

7. Werkzeughandhabungssystem (1) nach einem der Ansprüche 1 bis 6, **dadurch gekennzeichnet, dass** der verstellbare zweite Greiferfinger (15) mittels eines Schwenkgelenks (25) um eine Schwenkachse (26) am Greifergrundkörper (12) gelagert ist.

8. Werkzeughandhabungssystem (1) nach einem der Ansprüche 1 bis 6, **dadurch gekennzeichnet, dass** der verstellbare zweite Greiferfinger (15) mittels eines Schiebegelenks schräg in Bezug auf die Greiferlängsachse (13) am Greifergrundkörper (12) gelagert ist.

9. Werkzeughandhabungssystem (1) nach einem der Ansprüche 1 bis 8, **dadurch gekennzeichnet, dass** der verstellbare zweite Greiferfinger (15) einen Betätigungsfortsatz (33) aufweist, der in der Lösestellung in eine Ausnehmung (30) am feststehenden Greiferfinger (14) ragt.

10. Werkzeughandhabungssystem (1) nach einem der Ansprüche 1 bis 9, **dadurch gekennzeichnet, dass** die Greifvorsprünge (18) zueinander parallel und leistenförmig ausgebildet sind und die Hinterschneidungen (19) zueinander parallel und schwalbenschwanzförmig ausgebildet sind.

11. Werkzeughandhabungssystem (1) nach einem der Ansprüche 2 bis 10, **dadurch gekennzeichnet, dass** der Versatz (29) des verstellbaren zweiten Greiferfingers (15) in der Lösestellung gegenüber der Endfläche (27) des ersten Greiferfingers (14) zumindest eine Dickenabmessung des Greifvorsprungs (18) am ersten Greiferfinger (14) in Richtung der Greiferlängsachse (13) entspricht.

12. Werkzeughandhabungssystem (1) nach einem der Ansprüche 1 bis 11, **dadurch gekennzeichnet, dass** der erste Greiferfinger (14) mit einem Zentriervorsprung (31) verbunden ist und am Biegewerkzeug (2) eine an den Zentriervorsprung (31) angepasste Zentrierausnehmung (32) ausgebildet ist.

13. Werkzeughandhabungssystem (1) nach einem der Ansprüche 1 bis 11, **dadurch gekennzeichnet, dass** der verstellbare zweite Greiferfinger (15) eine Kröpfung in Richtung zum ersten Greiferfinger (14) aufweist.

14. Verfahren zum Entnehmen oder Einsetzen eines Biegewerkzeuges (2) an einer Werkzeughalterung (3) mittels eines Greifers (11), wobei das Biegewerkzeug (2) eine Greifausnehmung (16) und eine mit der Werkzeughalterung (3) zusammenwirkende Verriegelungseinrichtung (7) aufweist, die mit einem in der Greifausnehmung (16) angeordneten und in dieser zugänglichen Betätigungselement (10) deaktivierbar ist, und wobei der Greifer (11) zumindest einen in Richtung einer Greiferlängsachse (13) gerichteten, insbesondere feststehenden, ersten Greiffinger (14) und einen verstellbaren zweiten Greiffinger (15) umfasst, die an ihren Endabschnitten (17) bezogen auf die Greiferlängsachse (13) quer nach außen weisende und etwa gegenüberliegende Greifvorsprünge (18) zum Hintergreifen von einander gegenüberliegenden Hinterschneidungen (19) in der Greifausnehmung (16) aufweisen, **dadurch gekennzeichnet, dass** beim Entnehmen des Biegewerkzeuges (2) zuerst der erste Greiferfinger (14) in Eingriff mit einer Hinterschneidung (19) gebracht wird und dabei der verstellbare zweite Greiferfinger (15) das Betätigungselement (10) nicht kontaktiert oder die Verriegelungseinrichtung (7) nicht deaktiviert und anschließend der verstellbare zweite Greiferfinger (15) in Eingriff mit der weiteren Hinterschneidung (19) gebracht wird und dabei das Betätigungselement (10) kontaktiert oder die Verriegelungseinrichtung (7) deaktiviert und dass beim Einsetzen des Biegewerkzeuges (2) der verstellbare zweite Greiferfinger (15) außer Eingriff mit der weiteren Hinterschneidung (19) gebracht wird und dadurch das Betätigungselement (10) nicht mehr kontaktiert wird bzw. die Verriegelungseinrichtung (7) aktiviert wird und anschließend der erste Greiferfinger (14) außer Eingriff mit der Hinterschneidung (19) der Greifnut (16) gebracht wird.

## Claims

1. A tool handling system (1) for removing or inserting a bending tool (2) on a tool mounting (3), comprising a bending tool (2) with a gripping recess (16) and a locking device (7) cooperating with the tool mounting (3), which locking device can be deactivated by means of an actuating element (10) arranged in the gripping recess (16) and accessible in the latter, as well as a gripper (11) for manipulating the bending tool (2) and the actuating element (10), with a gripper base body (12) having at least two gripping fingers (14, 15) aligned in the direction of a gripper longitudinal axis (13) which at their end sections (17) relative to the gripper longitudinal axis (13) have transversely outwardly pointing and approximately opposite gripping projections (18) for engaging in opposite undercuts (19) in the gripping recess (16), wherein at least one first gripper finger (14) arranged on the gripper base body (12), in particular fixed, and at least one second gripper finger (15) adjustable by means of an articulation (20) on the gripper base body (12) is formed, and the second gripper finger (15) can be adjusted between an approached release position, relative to the first gripper finger (14), and a remote gripping position, **characterized in that** a first gripper finger (14) positioned fully in the gripping recess (16) the latter gripper finger and the adjustable second gripper finger (15) in the release position do not contact the actuating element (10) or do not deactivate the locking device (7) and the adjustable second gripper finger (15) in the gripping position contacts the actuating element (10) or deactivates the locking device (7).

2. The tool handling system (1) as claimed in claim 1, **characterized in that** the end surface (28) of the adjustable second gripper finger (15) is set back in the release position relative to the end surface (27) of the first gripper finger (14) in the direction of the gripper longitudinal axis (13) by an offset (29).

3. The tool handling system (1) as claimed in claim 1 or 2, **characterized in that** the end section (17) of the first gripper finger (14) has on its end surface (27) a recess (30) for the actuating element (10).

4. The tool handling system (1) as claimed in any of claims 1 to 3, **characterized in that** the gripping recess (16) is designed as a gripping groove (21) and the undercuts (19) run along the gripping groove (21), and the gripping projections (18) are designed to be parallel to one another and strip-like and run perpendicular to the gripper longitudinal axis (13).

5. The tool handling system (1) as claimed in any of claims 1 to 4, **characterized in that** the actuating element (10) is arranged in the gripping recess (16), in particular approximately centrally between the undercuts (19), and the actuating direction (22) of the actuating element (10) runs approximately parallel to the gripper longitudinal axis (13).

6. The tool handling system (1) as claimed in any of claims 1 to 4, **characterized in that** the actuating element (10) is arranged in one of the undercuts (19).

7. The tool handling system (1) as claimed in any of claims 1 to 6, **characterized in that** the adjustable second gripper finger (15) is mounted by means of a pivot joint (25) about a pivot axis (26) on the gripper base body (12).

8. The tool handling system (1) as claimed in any of claims 1 to 6, **characterized in that** the adjustable second gripper finger (15) is mounted by means of a slide joint obliquely relative to the gripper longitudinal axis (13) on the gripper base body (12).

9. The tool handling system (1) as claimed in any of claims 1 to 8, **characterized in that** the adjustable second gripper finger (15) comprises an actuating extension (33), which projects in the release position into a recess (30) on the fixed gripper finger (14).

10. The tool handling system (1) as claimed in any of claims 1 to 9, **characterized in that** the gripping projections (18) are designed to be parallel to one another and strip-like and the undercuts (19) are designed to be parallel to one another and in the form of a dovetail.

11. The tool handling system (1) as claimed in any of claims 2 to 10, **characterized in that** the offset (29) of the adjustable second gripper finger (15) in the release position relative to the end surface (27) of the first gripper finger (14) corresponds at least to a thickness dimension of the gripping projection (18) on the first gripper finger (14) in the direction of the gripper longitudinal axis (13).

12. The tool handling system (1) as claimed in any of claims 1 to 11, **characterized in that** the first gripper finger (14) is connected to a centering projection (31) and on the bending tool (2) a centering recess (32) adjusted to the centering projection (31) is formed.

13. The tool handling system (1) as claimed in any of claims 1 to 11, **characterized in that** the adjustable second gripper finger (15) comprises an offset bend in the direction of the first gripper finger (14).

14. A method for removing or inserting a bending tool (2) on a tool mounting (3) by means of a gripper (11), wherein the bending tool (2) comprises a gripping recess (16) and a locking device (7) interacting with the tool mounting (3), which locking device can be deactivated by an actuating element (10) arranged in the gripping recess (16) and accessible in the latter, and wherein the gripper (11) comprises at least one, in particular fixed, first gripping finger (14) aligned in the direction of a gripper longitudinal axis (13) and an adjustable second gripping finger (15), which at their end sections (17) comprise gripping projections (18) pointing outwards perpendicular to the gripper longitudinal axis (13) and approximately opposite for gripping behind opposite undercuts (19) in the gripping recess (16), **characterized in that** when removing the bending tool (2) firstly the first gripper finger (14) is moved into engagement with an undercut (19) and thereby the adjustable second gripper finger (15) does not contact the actuating element (10) or does not deactivate the locking device (7) and then the adjustable second gripper finger (15) is moved into engagement with the further undercut (19) and thereby contacts the actuating element (10) or deactivates the locking device (7) and when inserting the bending tool (2) the adjustable second gripper finger (15) is moved out of engagement with the further undercut (19) and in this way the actuating element (10) is no longer contacted and the locking device (7) is activated and afterwards the first gripper finger (14) is moved out of engagement with the undercut (19) of the gripping groove (16).

## Revendications

1. Système de manipulation d'outils (1) pour enlever ou mettre en place un outil de cintrage (2) au niveau d'un porte-outils (3), comprenant un outil de cintrage (2) avec une cavité de préhension (16) et avec un dispositif de verrouillage (7) qui coopère avec le porte-outils (3) et qui peut être désactivé au moyen d'un élément d'actionnement (10) disposé dans la cavité de préhension (16) et accessible dans celle-ci, et comprenant également un élément de préhension (11) destiné à la manipulation de l'outil de cintrage (2) et de l'élément d'actionnement (10), avec un corps de base (12) d'élément de préhension ayant au moins deux doigts de préhension (14, 15) qui sont orientés en direction d'un axe longitudinal (13) d'élément de préhension et qui, au niveau de leurs tronçons d'extrémité (17), par rapport à l'axe longitudinal (13) d'élément de préhension, présentent des saillies de préhension (18) dirigées vers l'extérieur et à peu près opposées pour l'engagement dans des contre-dépouilles (19), à peu près en face les unes des autres, dans la cavité de préhension (16), au moins un premier doigt de préhension (14), en particulier fixe, disposé sur le corps de base (12) d'élément de préhension et au moins un deuxième doigt de préhension (15) déplaçable au moyen d'une articulation (20) sur le corps de base (12) d'élément de préhension étant constitués, et le deuxième doigt de préhension (15) déplaçable entre une position de libération rapprochée, par rapport au premier doigt de préhension (14), et une position de préhension éloignée, **caractérisé en ce que**, quand le premier doigt de préhension (14) est entièrement positionné dans la cavité de préhension (16), ce premier doigt de préhension (14) et le deuxième doigt de préhension (15) déplaçable, quand il est dans la position de libération, ne sont pas en contact avec l'élément d'actionnement (10) ou ne désactivent pas le dispositif de verrouillage (7), et le deuxième doigt de préhension (15) déplaçable, quand il est dans la position de préhension, est en contact avec l'élément d'actionnement (10) ou désactive le dispositif de verrouillage (7).

2. Système de manipulation d'outils (1) selon la revendication 1, **caractérisé en ce que** la surface d'extrémité (28) du deuxième doigt de préhension (15) déplaçable, dans la position de libération du premier doigt de préhension (14), est, par rapport à la surface d'extrémité (27),ramenée en arrière selon un décalage (29), vu dans la direction de l'axe longitudinal (13) d'élément de préhension.

3. Système de manipulation d'outils (1) selon la revendication 1 ou 2, **caractérisé en ce que** le tronçon d'extrémité (17) du premier doigt de préhension (14) présente au niveau de sa surface d'extrémité (27) une cavité (30) pour l'élément d'actionnement (10).

4. Système de manipulation d'outils (1) selon l'une des revendications 1 à 3, **caractérisé en ce que** la cavité de préhension (16) est constituée en tant que rainure de préhension (21), et les contre-dépouilles (19) s'étendent le long de la rainure de préhension (21), de même que les saillies de préhension (18) sont constituées de façon parallèle entre elles et en forme de barrette et s'étendent transversalement à l'axe longitudinal (13) d'élément de préhension.

5. Système de manipulation d'outils (1) selon l'une des revendications 1 à 4, **caractérisé en ce que** l'élément d'actionnement (10) est disposé dans la cavité de préhension (16), en particulier de façon approximativement centrale, entre les contre-dépouilles (19), et la direction d'actionnement (22) de l'élément d'actionnement (10) est approximativement parallèle à l'axe longitudinal (13) d'élément de préhension.

6. Système de manipulation d'outils (1) selon l'une des revendications 1 à 4, **caractérisé en ce que** l'élément d'actionnement (10) est disposé dans une des contre-dépouilles (19).

7. Système de manipulation d'outils (1) selon l'une des revendications 1 à 6, **caractérisé en ce que** le deuxième doigt de préhension (15) déplaçable est supporté sur le corps de base (12) d'élément de préhension au moyen d'une articulation pivotante (25) autour d'un axe de pivotement (26).

8. Système de manipulation d'outils (1) selon l'une des revendications 1 à 6, **caractérisé en ce que** le deuxième doigt de préhension (15) déplaçable est supporté sur le corps de base (12) d'élément de préhension au moyen d'une articulation de poussée transversalement par rapport à l'axe longitudinal (13) d'élément de préhension.

9. Système de manipulation d'outils (1) selon l'une des revendications 1 à 8, **caractérisé en ce que** le deuxième doigt de préhension (15) déplaçable présente un prolongement d'actionnement (33) qui, dans la position de libération, dépasse dans une cavité (30) sur le doigt de préhension (14) fixe.

10. Système de manipulation d'outils (1) selon l'une des revendications 1 à 9, **caractérisé en ce que** les saillies de préhension (18) sont constituées de façon parallèle entre elles et en forme de barrette, et les contre-dépouilles (19) sont constituées de façon parallèle entre elles et en forme de queue d'aronde.

11. Système de manipulation d'outils (1) selon l'une des revendications 2 à 10, **caractérisé en ce que** le décalage (29) du deuxième doigt de préhension (15) déplaçable dans la position de libération par rapport à la surface d'extrémité (27) du premier doigt de préhension (14) correspond au moins à une dimension d'épaisseur de la saillie de préhension (18) sur le premier doigt de préhension (14) en direction de l'axe longitudinal (13) d'élément de préhension.

12. Système de manipulation d'outils (1) selon l'une des revendications 1 à 11, **caractérisé en ce que** le premier doigt de préhension (14) est raccordé à une saillie de centrage (31) et **en ce que**, sur l'outil de cintrage (2), il est constitué une cavité de centrage (32) adaptée à la saillie de centrage (31).

13. Système de manipulation d'outils (1) selon l'une des revendications 1 à 11, **caractérisé en ce que** le deuxième doigt de préhension (15) déplaçable présente un coude en direction du premier doigt de préhension (14).

14. Procédé destiné à l'enlèvement ou à la mise en place d'un outil de cintrage (2) au niveau d'un porte-outils (3) au moyen d'un élément de préhension (11), l'outil de cintrage (2) présentant une cavité de préhension (16) et un dispositif de verrouillage (7) qui coopère avec le porte-outils (3) et qui peut être désactivé avec un élément d'actionnement (10) disposé dans la cavité de préhension (16) et accessible dans celle-ci, et l'élément de préhension (11) comprenant au moins un premier doigt de préhension (14) orienté en direction d'un axe longitudinal (13) d'élément de préhension, en particulier fixe, et un deuxième doigt de préhension (15) déplaçable qui présentent au niveau de leurs tronçons d'extrémité (17), par rapport à l'axe longitudinal (13) d'élément de préhension, des saillies de préhension (18) dirigées transversalement vers l'extérieur et approximativement opposées pour l'agrippement par l'arrière de contre-dépouilles (19) opposées les unes aux autres dans la cavité de préhension (16), **caractérisé en ce que**, lors de l'enlèvement de l'outil de cintrage (2), le premier doigt de préhension (14) d'abord est mis en engagement avec une contre-dépouille (19), et alors le deuxième doigt de préhension (15) déplaçable n'est pas en contact avec l'élément d'actionnement (10) ou ne désactive pas le dispositif de verrouillage (7), et ensuite le deuxième doigt de préhension (15) déplaçable est mis en engagement avec l'autre contre-dépouille (19) et alors est en contact avec l'élément d'actionnement (10) ou désactive le dispositif de verrouillage (7) et **en ce que**, lors de la mise en place de l'outil de cintrage (2), le deuxième doigt de préhension (15) déplaçable est désengagé de l'autre contre-dépouille (19) et, de ce fait, l'élément d'actionnement (10) n'est plus en contact ou respectivement le dispositif de verrouillage (7) est activé, et ensuite le premier doigt de préhension (14) est désengagé de la contre-dépouille (19) de la cavité de préhension (16).
